**Europäisches Patentamt**

**European Patent Office**

**Office européen des brevets**

(19)

(11) Publication number : **0 346 299 B1**

(12) # EUROPEAN PATENT SPECIFICATION

(45) Date of publication of patent specification :
**20.05.92 Bulletin 92/21**

(51) Int. Cl.⁵ : **B64D 11/06,** B60N 2/02,
A47C 7/46

(21) Application number : **89830248.4**

(22) Date of filing : **05.06.89**

(54) **Improved chair for passenger transporting vehicles, particularly for aircrafts.**

(30) Priority : **06.06.88 IT 3573788 U**

(43) Date of publication of application :
**13.12.89 Bulletin 89/50**

(45) Publication of the grant of the patent :
**20.05.92 Bulletin 92/21**

(84) Designated Contracting States :
**DE FR GB NL**

(56) References cited :
**WO-A-88/04566
US-A- 2 922 416
US-A- 3 770 315
US-A- 4 130 318
US-A- 4 205 878**

(73) Proprietor : **AVIOINTERIORS S.P.A.
Via Appia km 66,400
I-04013 Tor Tre Ponti Latina (IT)**

(72) Inventor : **Veneruso, Raffaele c/o Aviointeriors
S.p.A.
Via Appia Km 66,400
I-04013 Tor Tre Ponti Latina (IT)**

(74) Representative : **Taliercio, Antonio et al
ING. BARZANO' & ZANARDO ROMA S.p.A. Via
Piemonte, 26
I-00187 Roma (IT)**

## Description

Subject matter of this invention is an improved chair for passenger transporting vehicles, particularly for aircrafts.

In deeper detail, this invention relates to a chair as above said especially designed to make the journey, in particular when long distances are involved, more comfortable to the passengers, which is an object of the present invention.

As it is known, a major source of discomfort in journeys with passenger transporting vehicles is connected with the necessity to be sitting for more or less long time periods.

In this context, the various chair manufacturing companies have been urged by the transport agencies to design a' number of technical solutions aimed at enhancing the position of the passengers, in the attempt to offer more and more comfortable service conditions to users.

More and more sophisticated and equipped chairs, therefore, have been manufactured, so as to make the journey conditions clearly more comfortable.

In US-A-2,922,416 a mechanism to provide a variable lumbar support is described, which mechanism comprises internal mechanical means for adjustment of the support.

Having the above object in mind and aiming at furnishing more enjoyful services, the Applicant has designed and manufactured the chair which is subject-matter of this invention, including construction features that are clearly novel with respect to any at present commercially available chairs.

It is therefore the main object of this invention to furnish a chair for passenger transporting vehicles provided with an adjustable lumbar support member which enables an optimum rest surface for the back of the passenger to be obtained in any circumstance.

It will be appreciated that this feature allows clearly relevant problems for passengers to be solved, particularly during long moves and in all those cases, such as transoceanic flights, wherein the chair should act as a sleeping chair.

It is a further object of this invention to furnish a chair having the above-mentioned technical feature and additionally provided with a number of fittings.

Therefore, there is provided a chair for passager transport vehicles, in particular for aircraft, comprising a lumbar support member, adjustable in a direction substantially perpendicular to the plane of the backrest by means of internal mechanical means including a first upper transversal axle, attached to the side upright of the back framework of the chair, a second lower transversal able also attached to said upright, a third transversal axle pivotally connected to said second transversal axle; control means for rotation of said third axle with respect to said second axle, and one or more comfort enhancing fittings for the passengers; characterized in that said lumbar support member is a padded cushion, and in that a plurality of flexible straps is provided, arranged side by side between said first and said third transversal axles, said flexible straps being bended to a more or less extent by said control means.

Said control means can be a lever connected at one end to the second transversal axis and at an intermediate position to said third transversal axle, said lever being also connected to control means arranged on the chair and provided with means to fix the position of the lumbar support member.

Furthermore, according to this invention, said chair can be provided with an adjustable head-rest having two side adjustable members, in particular hingedly connected by means of friction members at the junction with the rear portion of the head-rest.

Said chair can be provided with fittings, such as a rear foot-rest band for the passenger sitting in the successive chair, a rear shape particularly designed to enlarge the room available to the knees of the passenger sitting in the successive chair, a shock-absorbing band provided with a magazine bearing pocket, an adjustable TV module arranged on the rear side of the chair back, etc.

Preferred embodiments of this invention will be hereinafter disclosed, with reference to the figures of the annexed drawings, wherein:

figure 1 is a side view of a first embodiment of the chair according to this invention;

figure 2 is a cross-sectional elevation view of the chair shown in figure 1;

figure 3 is a rear view of the chair shown in figure 1;

figure 4 is a plan top view of the chair shown in figure 1;

figure 5 is perspective view of a rest arm of the chair according to this invention;

figure 6 is a schematic side view of the lumbar support member of the chairs according to this invention;

figure 7 is a cross-sectional view taken along line A-A of figure 6, and

figure 8 is a cross-sectional view of the head-rest structure of a chair according to this inventions.

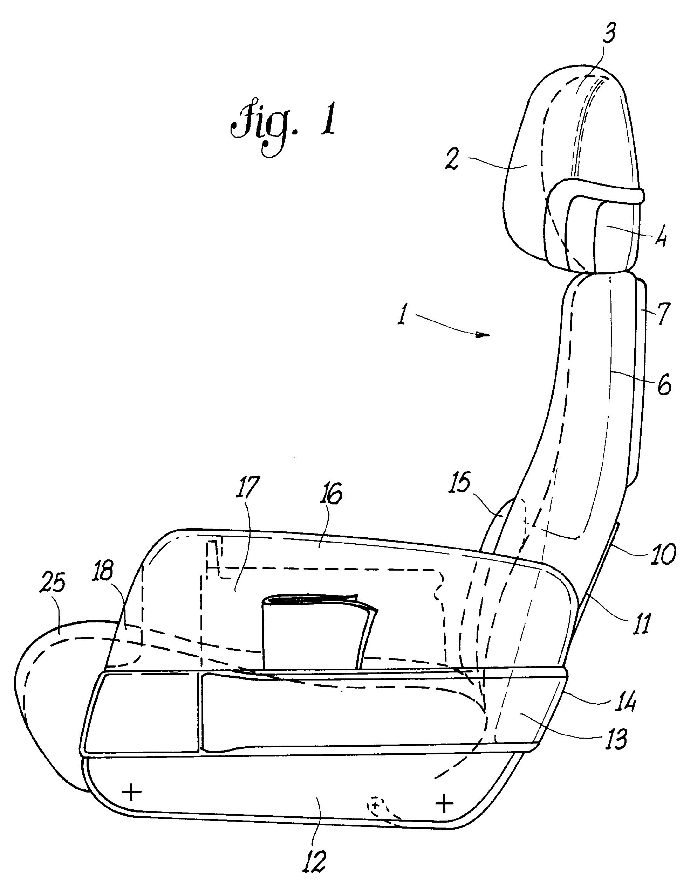

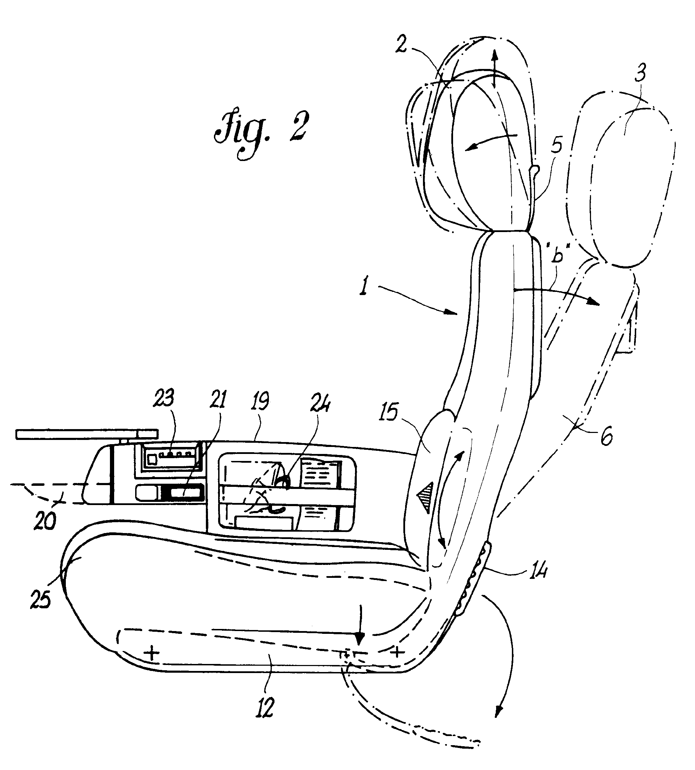

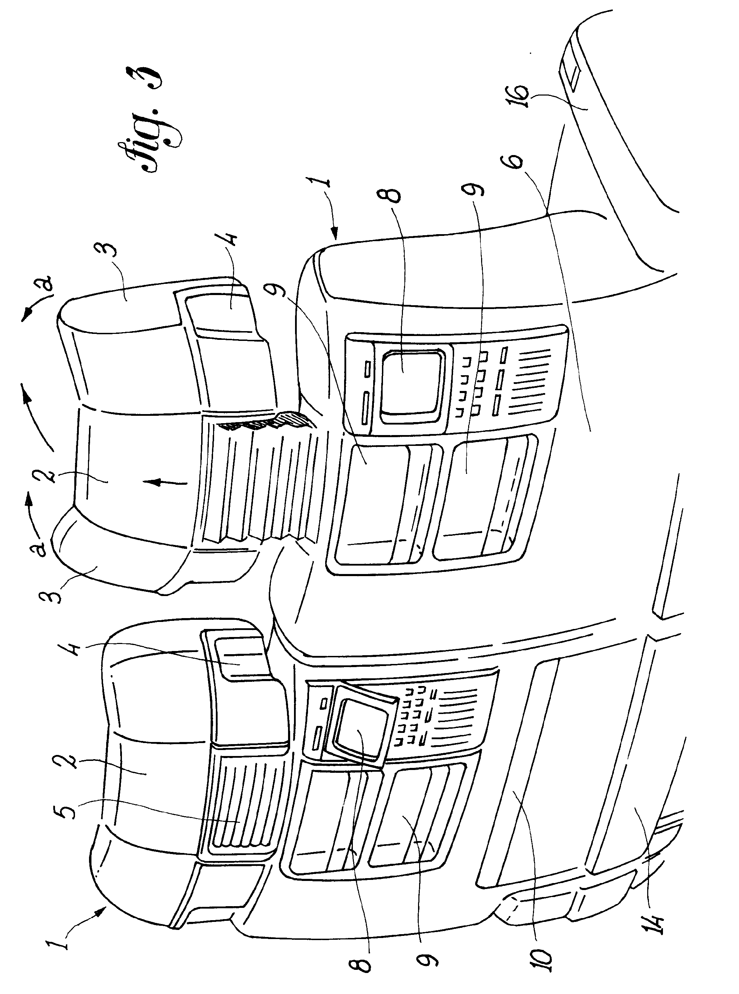

Referring now to figures 1 to 5, the chair 1 according to this invention is equipped with a tiltable and vertically adjustable head-rest 2, having two side members or ears 3, adjustable along arrows "a" in figure 3 by means of handles 4.

The above-mentioned handles 4 are mounted upon a band of polycarbonate arranged at the lower section of the head-rest 2.

A pocket 5 is provided rearwardly of the head-rest 2 in order to receive information pamphlets and like.

The inclination of back 6 of the chair 1 is continuously adjustable along arrow "b" in figure 2.

A frame 7 is provided in the rear section of the chair back 6 having an adjustable TV module 8 and two article bearing pockets 9 arranged thereon.

An additional magazine bearing pocket 10 is also provided under said frame on the chair back 6.

The chair back 6 has in this area a shaped profile 11 positively designed to make an enlarged room available to the knees of the passenger sitting in the successive chair.

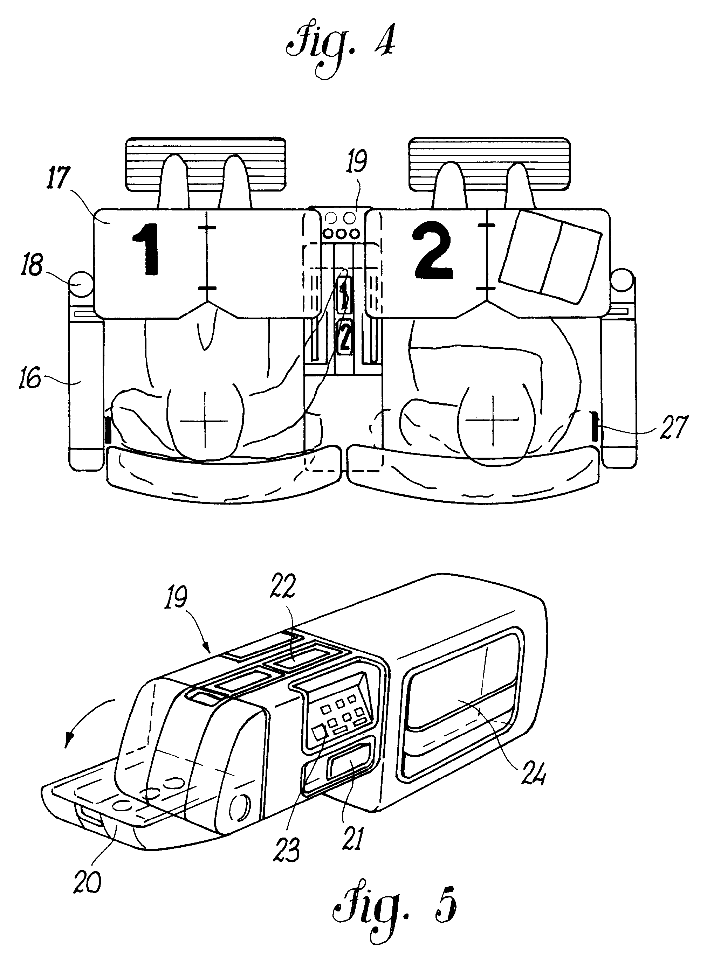

In the lower section of the chair 1, a frame 12 of polycarbonate is provided, comprising a side shock-absorbing band 13 with a magazine bearing pocket, as well as a foot-rest band 14 (as particularly shown in figure 4).

In the front end section of the chair back a lumbar support member 15 is provided, the features of which will be more detailedly disclosed hereinafter.

A folded table 17, which can be unfolded if necessary (see figure 4), is arranged within the side arm 16, namely in the arm that - when two side by side chairs 1 are considered - is not shared by said adjacent chairs. At the front end of said arm, a glass bearing seat 18 is provided.

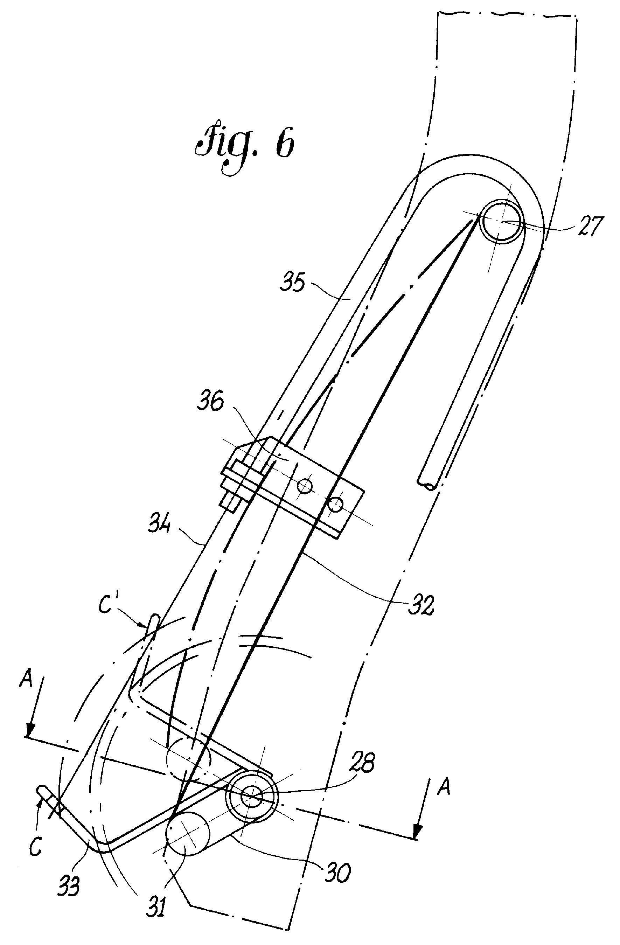

The central arm 19 which is shared by two adjacent chairs 1 (figure 5) comprises a pivotable article bearing drawer 20, a control member 21 for adjusting the inclination of the chair back 6, an ash-tray 22, emergency controls 23 for calling the flight assistants and a further article/headphone receiving pocket 24.

A control member 26 for adjustment of the lumbar support member is provided on the cushion 25 of the chair 1; both the cushion 25 and the back 6 of the chair have an anatomic profile.

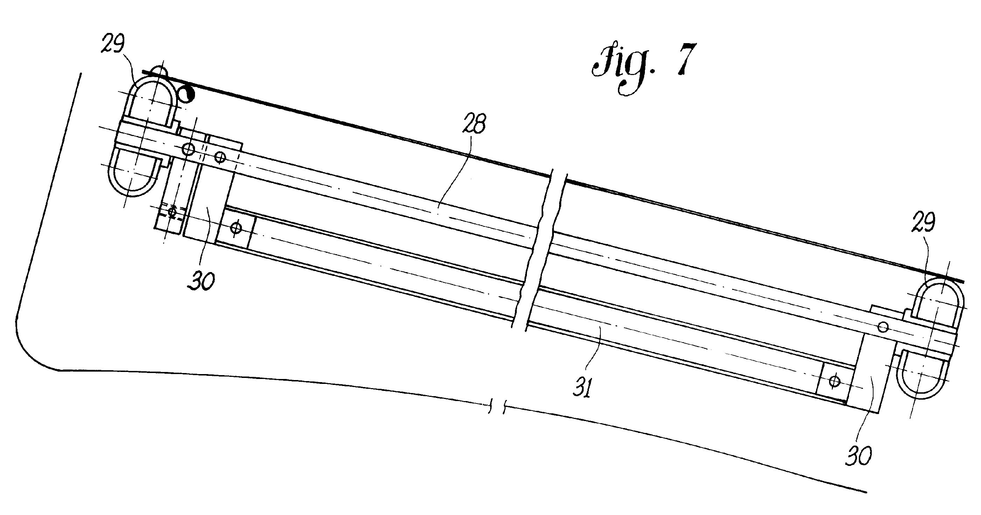

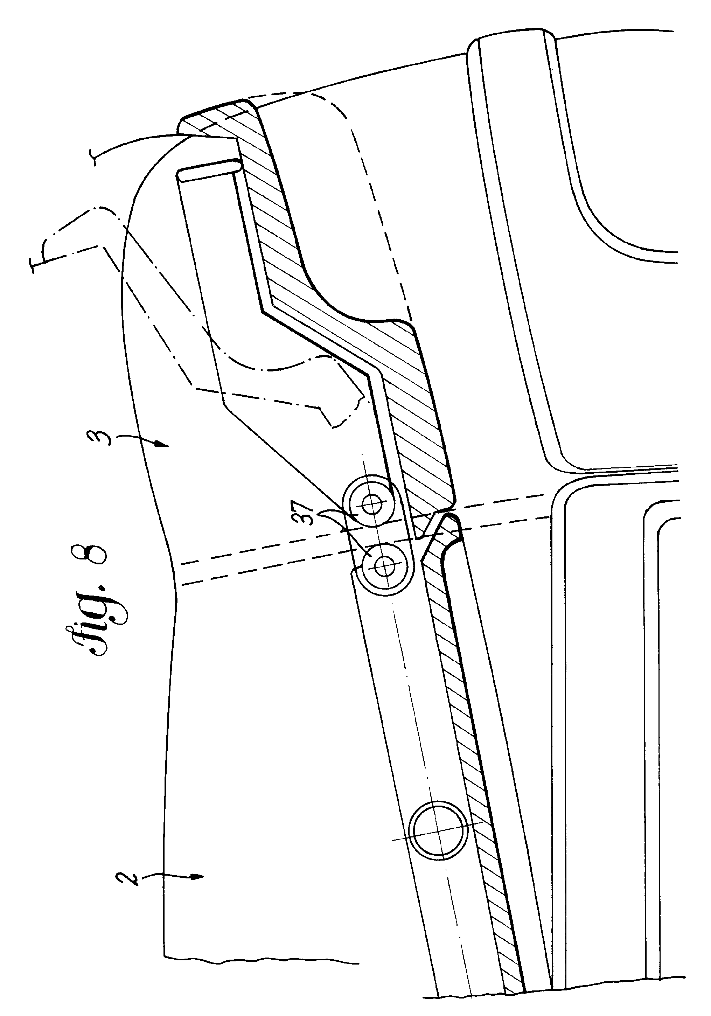

Referring now to figures 6 and 7, it can be appreciated that the structure of the lumbar support member 15 comprises two transversal axles 27 and 28 coupled to the upright tubes 29 of the chair framework.

A further transversal axle 31 is rotatably coupled in lower position to axle 28 by means of two brackets 30.

A number of elastic straps 32 are arranged side by side along the transversal extension of chair 1 between axle 27 and axle 31.

A lever 33 integrally coupled to axle 28 and to axle 23 enables the latter to rotate about axle 27, between positions C and C' in figure 6.

In this manner, the straps 32 and therefore the padded cushions of the lumbar support member 15 can be bent to a more or less extent.

Movements are transmitted to said lever 33 by the passenger by means of said control member 26 connected to the lever by means of a wire 34 extending in a guide sheath 35. The guide sheath 35 is fixed by means of a bracket 36 to one of the two upright tubes 29 of the framework of the chair 1.

Control member 26 also includes means to fix the position to which the lumbar support member 15 is adjusted.

In figure 8, the device is shown to adjust the position of the side flaps 3 of the head-rest 2, comprising a friction hinged connection 37 at the junction between the flap 3 and the rear section of the head-rest 2.

This invention has been disclosed in its preferred embodiments, but it should be understood that changes and/or variations can be made thereto by those skilled in the art without departing from the scope of the invention.

## Claims

1. A chair (1) for passenger transport vehicles, in particular for aircraft, comprising a lumbar support member (5), adjustable in a direction substantially perpendicular to the plane of the backrest by means of internal mechanical means including a first upper transversal axle (27), attached to the side upright of the back fremawork of the chair (1), a second lower transversal axle (28) also attached to said upright, a third transversal axle (31) pivotally connected to said second transversal axle (28), control means (33) for rotation of said third axle (31) with respect to said second axle (28), and one or more comfort enhancing fittings for the passemgers; characterized in that said lumbar support member (15) is a padded cushion, and in that a plurality of flexible straps (32) is provided, arranged side by side between said first and said third transversal axles, said flexible straps (32) being bended to a more or less extent by said control means (33).

2. A chair according to claim 1, characterized in that said control means are a lever (33) connected at one end to the second transversal axle (28) and at an intermediate position to said third transversal axle (32), said lever (33) being also connected to control means arranged on the chair (1) for the passenger to adjust the position of the lumbar support member (15).

3. A chair according to claim 2, characterized in that said control means (33) arranged on the chair (1) are provided with means to fix the position of the lumbar support member (15) as adjustable by the passenger.

4. A chair according to anyone of the preceding claims, characterized in that one of said fittings is an adjustable head-rest (2) including two adjustable side members (3) with respect to the rear portion of said head-rest (2).

5. A chair according to claim 4, characterized in that said two members (3) are adjustable by means of hinged connections (37) and friction couplings at their junctions with the rear portion of the head-rest (2).

6. A chair according to anyone of the preceding claims, characterized in that said fittings comprise a rear foot-rest band (4) for the passenger sitting in the successive chair (1), a lower section of the chair back especially shaped to enlarge the room available to the knees of the passenger sitting in the successive chair (1), a shock-absorbing band (13) provided with a magazine bearing pocket, an adjustable tv module (8) arranged on the upper section of the chair back.

## Patentansprüche

1. Fahrzeugsitz, insbesondere fuer Flugzeuge, mit einem lumbalen Stuetzelement (15), das in einer zur Ebene der Rueckenlehne wesentlich senkreckter Richtung durch innere mechanische Mittel regelbar ist, welche aus einer ersten oberen, am seitlichen Staender des hinteren Sitzes (1) bestfigten Querachse (27), einer zweiten unteren, gleichfalls am genannten Staender befestigen Querachse (28), einer dritten, an der genannten zweiten Querachse (28) angelenkten Querachse (31), Steurmittel (33) zum Drehen der genannten dritten Achse (31) bezueglich der genannten zweiten Querachse (28) und aus aus einer oder mehreren Komfort der Fahrgaest foerdernden Ausruestungen bestehen, dadurch gekennzeichnet, dass das genannte lumbale Stuetzelement ein gepolstertes Kissen ist und dass eine Mehrzahl von biegsamen Baendern (32) vorgesehen ist, die zu einander anliengend zwischen den genannten ersten und zweiten Querachsen angeordnet sind, wobei diese biegsame Baender (32) durch die genannten Stuermittel (33) mehr oder wenigen gebogen werden.

2. Fahrzeugsitz nach Anspruch 1, dadurch gekennzeichnet, dass die genannten Steurmittel aus einem, an dem einen Ende mit der zweiten Querachse (28) und an einer Zwischenstelle mit der dritten Querachse (31) verbundenen Hebel (33) bestehen, wobei dieser Hebel (33) auch mit am Fahrzeugsitz (1) angeordneten Steuermitteln verbunden ist, um die Stellung des lumbalen Stuetzelementes (15) zu regeln.

3. Fahrzeugsitz nach Anspruch 2, dadurch gekennzeichnet, dass die genannten, am Fahrzeugsitz (1) angeordneten Steuermittel (33) mit Mitteln versehen sind, die zur Sicherung der durch den Fahrgast geregelten Stellung des lumbalen Stuetzelementes (15) dienen.

4. Fahrzeugsitz nach je einem der vorhergehenden Ansprueche, dadurch gekennzeichnet, dass eine der genannten Ausruestungen (2) eine regelbare Kopflehne (2) ist, mit zwei gegenueber dem Hinterteil der genannten Kopflehne (2) regelbaren Seitenglieder (3).

5. Fahrzeugsitz nach Anspruch 4, dadurch gekennzeichnet, dass die genannten zwei Seitenglieder (3) durch Gelenkkupplungen (37) und Reibungskupplungen an den Kupplungstellen mit dem Hinterteil der Kopflehne (2) regelbar sind.

6. Fahrzeugsitz nach je einem der vorhergehenden Ansprueche, dadurch gekennzeichnet, dass die genannten Ausruestungen eine hintere Fusslehne (4) fuer den am hinteren Fahrzeugsitz (1) sitzenden Fahrgast, eine untere zur Vergroesserung des die Knien des auf dem hinteren Fahrzeugsitz (1) sitzenden Fahrgastes aufnehmenden Raumes besonders geformte Zone der Rueckenlehne, ein stossfestes, mit Zeitungstasche versehenes Seitenband (13) und eine regelbare, an der oberen Zone der hinteren Flaeche der Rueckenlehne des Fahrzeugsitzes angeordnete TV-Einheit (B) enthalten.

## Revendications

1. Siège pour véhicule transportant des passagers, en particulier des avions, comprenant un élément de support lombaire (15), réglable en une direction substantiellement perpendiculaire au plan du dossier au moyen d'éléments mechaniques intérieurs ayant un premier axe transversal supérieur (27), fixé à un montant latéral du chassis postérieur du siège (1), un deuxième axe transversal inférieur (28) fixé au dit montant, un troisième axe transversal (31) articulé au dit deuxième axe transversal (28), moyens de controle (33) pour faire pivoter le dit troisième axe (31) par rapport au dit deuxième axe transversal (28) et un ou plusieurs accessoires pour améliorer le confort des passagers, caracterisé en ce que ledit élément de support lombaire (15) est un coussin rembourré et que plussieurs rubans flexibles sont disposés l'un à coté de l'autre entre ledit premier et ledit troisième axe transversal, lesdits rubans flexibles étant plus ou moins flechis de par lesdits moyens de contrôle (33).

2. Siège selon la revendication 1, caractérisé en ce que lesdits éléments de contrôle sont un levier (33) uni à un de ses but avec le deuxième axe transversal (28) et à un point intermédiaire avec ledit troisième axe transversal (31), ledit levier étant aussi uni avec de moyens de contrôle disposés sur le siège (1) des passagers pour regler la position dudit élément de support lombaire (15).

3. Siège selon la revendication 2, caractérisé en ce que lesdits moyens de contrôle (33) disposés sur le siège (1) sont munis de moyens pour fixer la position de l'élément de support lombaire (15), ajusté par le passager.

4. Siège selon l'une quelconque des revendications précédentes caractérisé en ce que l'un de ces accessoires est un appui-tête ajustable (2) comprenant deux éléments latérals (3) ajustables par rapport à la partie postérieure dudit appui-tête (2).

5. Siège selon la revendication 4, caractérisé en ce que lesdits deux éléments (3) sont ajustables au moyens d'un joint articulé (37) et de joints à friction dans leur points d'enclenchement avec la partie postérieure de l'appui-tête (2).

6. Siège selon l'une quelconque des revendications précédentes, caractérisé en ce que lesdits accessoires comprennent une bande repose-pied postérieure pour le passager assis sur le siège postérieur, une section inférieure de la surface postérieure du siège façonnée spécialement pour élargir l'espace disponible pour les genoux du passager assis sur le siège postérieur (1), une bande d'amortissement des coups (13) muni d'une poche porte-magazine, un module TV adjustable (8) disposé sur la section supérieure de la surface postérieure du dossier du siège.

*Fig. 1*

Fig. 2

fig. 3

*Fig. 4*

*Fig. 5*

*fig. 6*

fig. 7

fig. 8